# FASCICULE DE BREVET EUROPEEN

(11) **EP 4 356 019 B1**
(45) Date de publication et mention de la délivrance du brevet: **29.07.2026**
(21) Numéro de dépôt: 22735553.4
(22) Date de dépôt: 08.06.2022
(51) Int. Cl.: F16D 65/18, B60T 13/74, F16D 65/00

(54) **FREIN À DISQUE INTÉGRANT UN FREIN DE PARKING ÉLECTROMÉCANIQUE**
SCHEIBENBREMSE MIT EINER ELEKTROMECHANISCHEN FESTSTELLBREMSE
DISC BRAKE INTEGRATING AN ELECTROMECHANICAL PARKING BRAKE

(30) Priorité: 15.06.2021 FR 2106325
(43) Date de publication de la demande: 24.04.2024
(73) Titulaire: Hitachi Astemo France, 93700 Drancy (FR)
(72) Inventeur: AUGUSTE, Antony, 94350 VILLIER SUR MARNE (FR); BOURLON, Philippe, 77230 DAMMARTIN EN GOËLE (FR)
(74) Mandataire: Santarelli
(86) Numéro de dépôt international: PCT/FR2022/051089
(87) Numéro de publication internationale: WO 2022/263747

(56) Documents cités:
- US-A1- 2014 110 196
- US-A1- 2020 256 411

## Description

### DOMAINE TECHNIQUE ET ÉTAT DE LA TECHNIQUE ANTÉRIEURE

La présente invention se rapporte au domaine des freins à disque, notamment les freins à disque à actionnement au moins en partie électrique.

Un exemple de frein à disque comporte une chape destinée à être fixée à un porte-fusée d'un véhicule automobile, un étrier monté flottant par rapport à la chape, deux plaquettes de frein destinées à venir en contact avec un disque de frein fixé en rotation sur une roue. L'étrier comporte un piston qui peut être déplacé sous l'action d'un fluide sous pression pour appliquer une des plaquettes contre une face du disque de frein. Par réaction, l'étrier coulisse est applique l'autre plaquette contre l'autre face du disque de frein.

Lorsque la pression est relâchée, le piston recule et permet à la plaquette en contact avec celui-ci de s'écarter du disque de frein, la force de freinage s'annule. L'autre plaquette s'écarte également de l'autre face du disque.

Dans l'industrie automobile, le freinage de stationnement a pour fonction d'immobiliser le véhicule à l'arrêt afin de l'empêcher de bouger de façon inopinée. Il satisfait en outre à la disposition légale exigeant un deuxième système de freinage indépendant du système de freinage de service, généralement hydraulique.

Il existe également des freins à disque munis d'un frein de stationnement ou de parking électromécanique comportant un dispositif qui sous l'action d'un moteur électrique permet de déplacer le piston afin d'appliquer les plaquettes de frein contre le disque. Le dispositif est par exemple à vis sans fin et est logé dans le piston. Un bouton situé dans l'habitacle permet l'activation du frein de parking. Les freinages en phase de roulage sont obtenus par actionnement hydraulique.

Il est souhaitable de disposer d'un frein à disque dans lequel l'effort de poussée du piston sur la plaquette de frein est réparti de manière plus équilibrée.

Par ailleurs, dans des applications à des véhicules de grande taille et ou de grande puissance, on prévoit d'utiliser des freins à disque bi-piston, i.e. comportant deux pistons qui sont actionnés simultanément pour appliquer les plaquettes contre le disque. Un tel frein à disque permet de générer une puissance de freinage importante.

Ce type de frein à disque est par exemple mis en œuvre dans les véhicules utilitaire tels que camionnettes ou camion léger, les voitures dites sportives de grosse cylindrée ou dans les véhicules utilitaires sports ou SUV (Sport utility vehicle en terminologie anglo-saxonne).

Lorsque l'on souhaite intégrer une fonction frein de parking électromécanique à un frein à disque bi-piston, un moteur et une chaîne de force pour chaque piston est requise. Or la mise en œuvre de deux moteurs augmente l'encombrement général du frein ainsi que sa masse. En outre une telle intégration est complexe.

Les documents suivants US 2014/110196 A1 et US 2020/256411 A1 peuvent être cités comme art antérieur.

### EXPOSÉ DE L'INVENTION

C'est par conséquent un but de la présente invention d'offrir un frein à disque à au moins deux pistons actionnés hydrauliquement intégrant une fonction de frein de parking électromécanique sans présenter les inconvénients énoncés ci-dessus.

Le but énoncé ci-dessus est atteint par un frein à disque comportant au moins deux pistons, un élément de poussée et un dispositif d'interface entre l'élément de poussée et la plaquette de frein

Les au moins deux pistons sont actionnés hydrauliquement et le l'élément de poussée, qui peut être un piston ou non, est actionné par un motoréducteur, l'élément étant disposé entre les deux pistons actionnés hydrauliquement. Le dispositif d'interface est en appui contre le support de plaquette, et comporte une plaque munie de deux ouvertures traversantes disposées de sorte à être traversées par les nez de pistons des deux pistons actionnés hydrauliquement, qui viennent en contact avec le support de plaquette. L'élément de poussée actionné par le moteur électrique est destiné à venir en appui contre la plaque dans une zone centrale de celle-ci entre les deux ouvertures traversantes.

La mise en œuvre de la plaque d'interface entre l'élément de poussée central et la plaquette assure une répartition équilibrée et homogène sur la plaquette de frein

L'actionnement du frein de parking est avantageusement obtenu en deux étapes :
- Actionnement hydraulique des au moins deux pistons pour appliquer la plaquette sur le disque.
- Actionnement de l'élément de poussée par alimentation du moteur électrique permettant d'augmenter l'effort sur le disque et verrouiller la plaquette contre le disque.
- Relâchement de la pression hydraulique dans les deux pistons.

L'application de la plaquette de frein contre le disque de frein par les deux pistons assure automatiquement une distribution de force équilibrée et homogène sur la plaquette de frein, et le maintien de la plaquette contre le disque par l'élément de poussée via la zone centrale de la plaque d'interface assure le maintien de cet effort équilibré et homogène.

En d'autres termes, on réalise un frein bipiston qui comporte en un élément central qui vient appuyer contre la plaquette de frein via un plaque qui assure une réparation équilibrée et homogène de la force d'appui sur la plaquette de frein.

L'invention est simple à mettre en œuvre et ne demande pas de modification du frein pour son intégration. En outre elle permet de mette en œuvre des actionneurs de freinage de parking électromécaniques déjà mis en œuvre dans des freins à disque monopiston.

Dans un exemple de réalisation, l'élément de poussée est un piston, qui est également actionné hydrauliquement.

Avantageusement le dispositif d'interface est guidé par la chape.

La présente invention se rapporte à un frein à disque comportant une chape, au moins une première plaquette de frein montée coulissante dans la chape, ladite première plaquette de frein comportant un support de plaquette et un matériau de friction, un étrier comportant des moyens de déplacement de ladite première plaquette comprenant au moins un premier piston et un deuxième piston montés coulissant dans l'étrier et actionnables hydrauliquement, de sorte à déplacer la première plaquette de frein par rapport à la chape Le frein comporte également au moins un élément de poussée monté coulissant dans l'étrier et actionnable au moins par un actionneur configuré pour déplacer axialement l'élément de poussée, ledit élément de poussée étant disposé entre le premier piston et le deuxième piston en considérant une direction transversale. Le frein comporte également un dispositif d'interface disposé entre l'élément de poussée et le support de plaquette, ledit dispositif d'interface comportant une plaque d'interface comprenant une première ouverture traversante alignée avec le premier piston et traversé par le nez de piston du premier piston et une deuxième ouverture traversante, alignée avec le deuxième piston et traversée par le nez de piston du deuxième piston, de sorte à venir en contact avec le support de plaquette, et le nez dudit élément de poussée est destiné à venir en contact avec la plaque d'interface entre les première et deuxième ouvertures.

Avantageusement, la plaque d'interface du dispositif d'interface est guidée axialement par la chape.

De préférence, les dimensions des première et deuxième ouvertures sont telles que les premier et deuxième pistons coulissent librement dans les première et deuxième ouvertures respectivement.

La plaque est avantageusement en acier dur.

Dans un exemple de réalisation, l'élément de poussée est actionnable hydrauliquement.

Dans un exemple, le frein peut comporter une deuxième plaquette de frein et dans lequel l'étrier est monté coulissant par rapport à la chape.

L'invention a également pour objet un dispositif d'interface pour frein à disque, ledit frein à disque comportant au moins deux pistons actionnables hydrauliquement et un élément de poussée actionnable au moins électriquement, ledit dispositif comportant une plaque d'interface configurée pour se loger entre le support de plaquette et des moyens de déplacement de ladite plaquette en direction du disque de frein, ladite plaque d'interface comportant deux ouvertures pour les passages desdits deux pistons actionnables hydrauliquement et une zone centrale pleine.

Le dispositif d'interface est avantageusement configuré pour être guidé au moins axialement par la chape du frein à disque.

Avantageusement la plaque d'interface est en acier dur.

Un autre objet de la présente demande est un procédé d'actionnement d'un frein à disque selon l'invention, suite à une instruction d'activer le frein de parking, comportant :
a) Déplacement des premier et deuxième pistons par application d'une pression hydraulique de sorte à venir en contact direct avec le support de plaquette à travers la plaque d'interface et à appliquer le matériau de friction de la plaquette de frein contre le disque de frein.
b) Maintien de la pression hydraulique.
c) Déplacement de l'élément de poussée au moyen dudit actionneur de sorte à venir en appui contre la plaque d'interface et à appliquer davantage le matériau de friction de la plaquette de frein contre le disque de frein à travers la plaque d'interface.
d) Blocage de l'élément de poussée en position.
e) Relâchement de la pression hydraulique.

Dans un exemple de réalisation, lors de l'étape a) l'élément de poussée est déplacé par application d'une pression hydraulique.

Suite à une instruction de désactiver le frein de parking, le procédé d'actionnement peut comporter :
- Déplacement des premier et deuxième pistons par application d'une pression hydraulique de sorte à venir exercer un effort supplémentaire sur le matériau de friction de la plaquette de frein contre le disque de frein.
- Maintien de la pression hydraulique.
- Déplacement de l'élément de poussée au moyen dudit actionneur en éloignement de la plaque d'interface.
- Relâchement de la pression hydraulique.

### BRÈVE DESCRIPTION DES DESSINS

La présente invention sera mieux comprise sur la base de la description qui va suivre et des dessins en annexe sur lesquels:
Figure 1 est une vue en perspective d'un exemple de frein à disque selon l'invention.
Figure 2 est une représentation schématique d'une vue de dessus du frein de la figure 1, l'étrier étant omis.

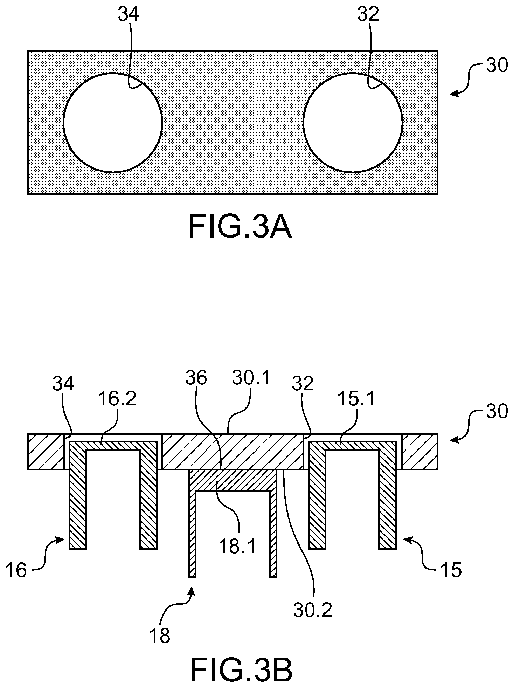

Figure 3A est une vue de face d'un exemple dispositif d'interface selon l'invention.
Figure 3B est vue en coupe transversale selon le plan A-A du dispositif de la figure 3A, coopérant avec les pistons.
Figure 4A, Figure 4B, Figure 4C, Figure 4D sont des représentations schématiques des différentes configurations du frein de la figure 1 lors d'une phase d'activation du frein de parking.

### EXPOSÉ DÉTAILLÉ DE MODES DE RÉALISATION PARTICULIERS

La direction axiale est parallèle à l'axe du disque et la direction transversale est orthogonale à l'axe du disque.

La direction amont aval est considérée dans le sens de déplacement axial du piston en phase de freinage.

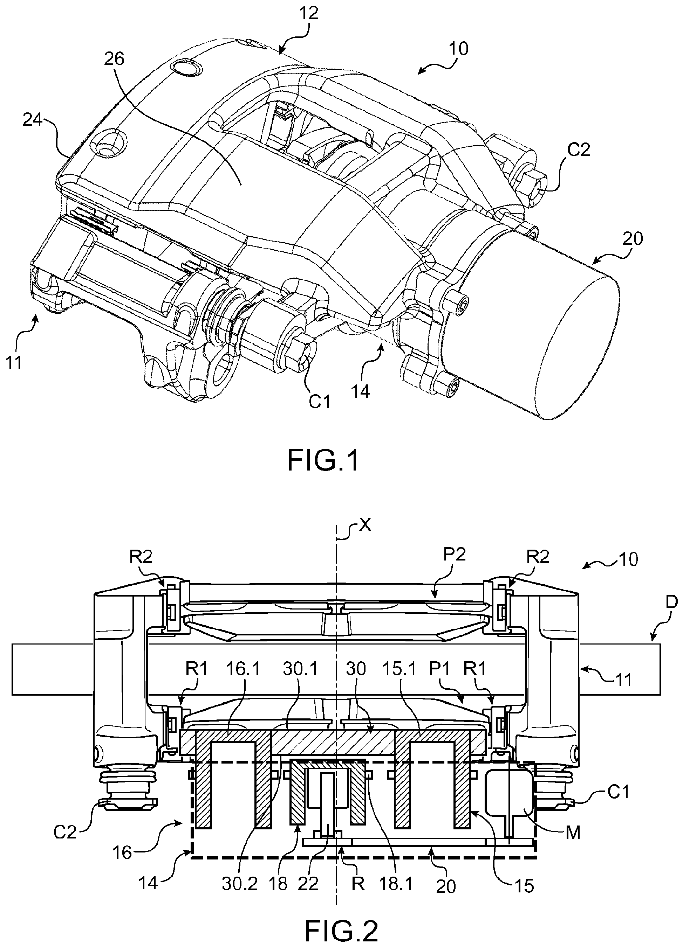

Le frein à disque 10 comporte un étrier 12 comportant un boîtier arrière 14 dans lequel un premier piston de frein 15 et un deuxième piston de frein 16 sont montés coulissant axialement selon l'axe X. Le frein à disque comporte également une chape 11 destinée à être fixée sur le porte-fusée d'une roue. La chape 11 supporte les patins de frein ou plaquettes de frein P1 et P2 (figure 2). Chaque plaquette de frein comporte un support de plaquette destiné à être en contact avec le nez 15.1 et 16.1 des premier 15 et deuxième 16 pistons respectivement ou avec le nez d'étrier et une garniture de frein destinée à venir en contact avec le disque de frein.

Le frein à disque comporte deux colonnettes C1 et C2 permettant le coulissement de l'étrier par rapport à la chape. L'une C2 de colonnettes permet d'ouvrir le frein en faisant pivoter l'étrier autour de l'autre colonnette C1 et de remplacer les plaquettes de frein.

Les plaquettes de frein comportent des oreilles. Les oreilles s'étendent latéralement vers l'extérieur et coopèrent avec des gorges ou rainures portées par la chape de sorte à assurer le guidage axial des plaquettes par rapport au disque. Dans l'exemple représenté et de manière avantageuse, des ressorts R1, R2 sont montés dans les gorges et reçoivent les oreilles. Les ressorts facilitent le coulissement des plaquettes et peuvent assurer une fonction de guidage axial et de rappel, voire une fonction de rattrapage de jeu.

Dans l'exemple représenté, le frein à disque 10 comporte également un module frein de parking comprenant par exemple un piston 18, désigné troisième piston, disposé entre les premier 15 et le deuxième 16 pistons et destiné à se déplacer le long de la direction X également.

Les pistons 15, 16 sont montés coulissant dans un boîtier d'étrier qui est relié à un circuit hydraulique de liquide de frein. Le module frein de parking comporte un groupe motoréducteur ou actionneur électromécanique 20 monté dans le boîtier. Le groupe motoréducteur comprend un moteur électrique M et un mécanisme réducteur R (représentés schématiquement). En outre l'actionneur comporte des moyens pour transformer le déplacement en rotation de l'arbre du moteur en déplacement axial du piston, ces moyens sont auto-bloquants. Dans l'exemple représenté, ces moyens sont de type vis-écrou irréversible. Par exemple, un axe fileté 22 entraîné en rotation par l'actionneur est vissé dans une douille qui porte une couronne de blocage (non représentées) en rotation de cette douille par rapport au troisième piston 18 du côté opposé au nez 18.1 du troisième piston 18.

La rotation de l'axe fileté dans un sens provoque un déplacement axial du troisième piston en direction de la plaquette intérieure et une rotation de l'axe fileté en sens inverse provoque un déplacement axial du troisième piston en éloignement de la plaquette intérieure.

Le motoréducteur est par exemple proche ou similaire au motoréducteur décrit dans le document FR3024516.

Dans l'exemple représenté, l'étrier 12 est de type coulissant. L'étrier comporte un nez d'étrier 24 raccordé au boîtier 14 (représenté en pointillés sur la figure 2) par une voûte 26 est destinée à chevaucher le disque de frein D (représenté en pointillés sur la figure 2). Le nez 24 est situé axialement en aval de la plaquette extérieure en considérant le sens de déplacement de la plaquette intérieure P1. Le nez 24 est destiné à venir exercer un effort de poussée sur la plaquette extérieure P2 en direction du disque de la manière suivante.

La plaquette intérieure P1 est déplacée par les pistons 15 et 16 pour venir en contact avec une face du disque et la plaquette extérieure P2 est déplacée en direction de l'autre face du disque par déplacement de l'étrier par réaction, du fait du contact entre la plaquette intérieure et le disque de frein.

Dans cet exemple, les dimensions du disque D destiné à être freiné par le frein à disque, des plaquettes de frein P1, P2, de la chape 11 supportant les plaquettes et au moins de la voûte 26 et du nez d'étrier 24 sont celles d'un frein à disque bi-piston, i.e. d'un frein à disque comportant un boîtier dans lequel sont habituellement montés deux pistons destinés à venir en appui contre la plaquette intérieure.

Le frein à disque comporte également un dispositif d'interface destiné à assurer l'application d'un effort de freinage en fonction frein de parking équilibré et homogène sur toute la surface de la plaquette intérieure.

Le dispositif d'interface comporte une plaque 30 destinée à être disposée en amont de la plaquette intérieure entre les premier 15, deuxième 16 et troisième 18 pistons.

La plaque 30 présente une forme et des dimensions extérieures proches ou similaires à celles du support de plaquette intérieure de sorte à être en appui sur une grande surface de celle-ci.

De manière avantageuse, la plaque 30 est guidée par la chape, en particulier ses extrémités radiales sont montées dans les rainures de la chape. Avantageusement la plaque d'interface 30 participe au guidage axial de la plaquette de frein P1.

La plaque 30 comporte une face aval 30.1 destinée à venir en contact avec la face arrière du support de plaquette intérieure et une face amont 30.2 orienté du côté des pistons.

La plaque 30 peut être entraînée radialement par la plaquette de frein du fait de son déplacement radial sous l'effet du couple de freinage exercé par le disque de frein en phase de freinage.

La plaque 30 comporte une première ouverture traversante 32 et une deuxième ouverture traversante 34 disposées sur la plaque 30 de sorte que, lorsqu'elle est montée dans la chape, la première ouverture 32 est alignée avec le premier piston 15 et la deuxième ouverture est alignée avec le deuxième piston 16. En outre, la première ouverture 32 et la deuxième ouverture 34 sont dimensionnées pour permettre le passage des pistons avec jeu à travers les ouvertures 32, 34. Le jeu entre la surface latérale extérieure du piston et la surface latérale intérieure est au moins égal au déplacement radial de la plaquette de frein intérieure afin d'éviter un coincement des pistons dans les ouvertures. Dans l'exemple représenté, les pistons 15, 16 ont une section circulaire et les ouvertures ont également une section circulaire. Les dimensions des ouvertures peuvent être sensiblement plus grandes que les dimensions transversales des pistons.

La plaque 30 comporte entre les deux ouvertures une zone centrale 36 contre laquelle le nez 18.1 du troisième piston 18 est destiné à venir en contact. Cette zone centrale 36 est pleine, le nez 18.1 du troisième piston ne venant pas en contact avec le support de plaquette de frein et exerce l'effort de poussée sur la plaquette de frein via la plaque 30. La zone centrale 36 de la plaque 30 est sensiblement alignée avec la zone centrale du support de plaquette intérieur. Avantageusement l'appui du troisième piston 18 sur la zone centrale de la plaque d'interface est une liaison rotule.

La plaque d'interface est réalisée en un matériau rigide afin de ne pas fléchir et de permettre une répartition homogène de l'effort exercé par le troisième piston. Par exemple, la plaque 30 est en acier dur, avantageusement dans le même matériau que celui du support de plaquette de frein intérieure.

Le piston 18, lorsqu'il est déplacé uniquement par l'actionneur 20, peut être remplacé par tout élément capable d'exercer un effort de poussée sur la plaque d'interface 30, par exemple il peut s'agir d'un écrou ou d'une vis suivant la configuration de l'actionneur.

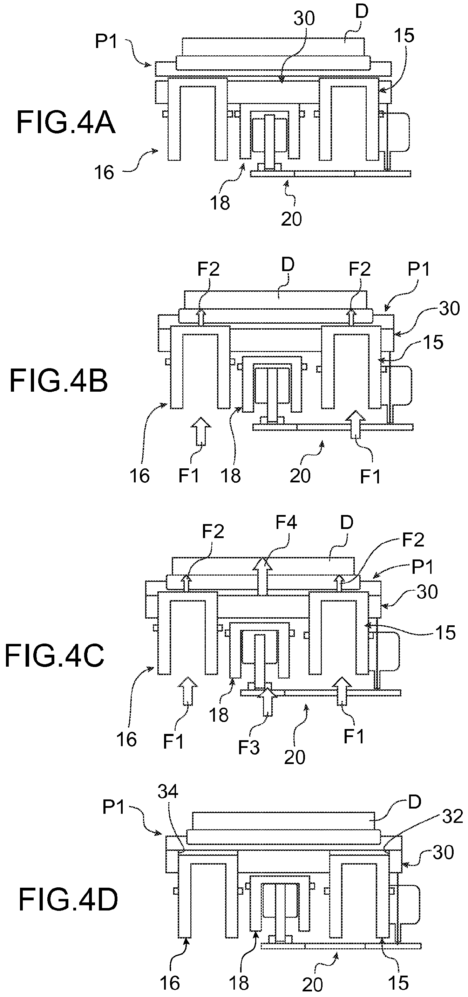

Le fonctionnement du frein à disque de la figure 1 va maintenant être décrit en relation avec les figures 4A à 4D. Sur les figures 4A à 4D, seule la plaquette de frein intérieure, les pistons et le motoréducteur sont représentés, la chape, l'étrier et la plaquette de frein extérieurs ont été omis.

Sur la figure 4A, le frein à disque est au repos. La garniture de la plaquette extérieure est écartée du disque de frein.

Pour appliquer le frein de parking, par exemple le conducteur appuie sur un bouton situé sur le tableau de bord. Lors d'une première phase les premier 15 et deuxième 16 pistons sont déplacés sous l'action d'un fluide hydraulique sous pression, les nez de piston 15.1, 16.1 qui traversent la plaque 30, viennent en appui contre le support de plaquette intérieure, ce qui a pour effet de déplacer la plaquette intérieure vers le disque et appliquer la garniture contre le disque de frein. Le coulissement des pistons est schématisé par les flèches F1. Le coulissement des pistons 15, 16 à travers la plaque 30 se fait sans contact avec celle-ci. Le fluide sous pression est par exemple délivré par une pompe. La pression hydraulique est maintenue. L'effort appliqué par les premier15 et deuxième 16 pistons sur la plaquette contre le disque de frein est symbolisé par les flèches F2 (figure 4B). Par réaction, l'étrier de frein coulisse par rapport à la chape et applique la plaquette de frein extérieure contre l'autre face du disque de frein.

Lors d'une deuxième phase, le motoréducteur est activé, provoquant le déplacement du troisième piston 18 en direction de la plaque 30. Le nez 18.1 du troisième piston 18 entre en contact avec la zone centrale 32 de la plaque 30 et applique un effort supplémentaire à la plaquette de frein en direction du disque à travers la plaque 30. Le coulissement du troisième piston 18 est symbolisé par la flèche F3. L'effort appliqué par le troisième piston 18 à la plaquette de frein contre le disque est symbolisé par la flèche F4. Le motoréducteur est désactivé lorsqu'un effort prédéterminé est atteint. Le troisième piston 18 bloque en position serrée la plaquette intérieure sur le disque (figure 4C).

Lors d'une troisième phase la pression hydraulique est relâchée (figure 4D) et les pistons 15 et 16 reprennent leur position repos.

L'effort appliqué sur la plaquette de frein intérieure en position frein de parking est réparti de manière équilibré et homogène grâce à la mise en œuvre de la plaque 30.

En utilisant les pistons hydrauliques dans une première phase, on assure avantageusement l'application équilibrée et homogène de l'effort de la plaquette sur le disque.

En utilisant une plaque 30 rigide et un actionneur électromécanique qui exerce un appui contre la zone centrale de la plaquette de frein, on bloque la plaquette en position et on conserve l'application équilibrée et uniforme.

La plaquette extérieure est appliquée contre l'autre face du disque de frein quasi-simultanément du fait du coulissement de l'étrier par rapport à la chape.

Toutefois, il est bien entendu que l'application du frein de parking uniquement avec le motoréducteur ne sort pas du cadre de la présente invention.

L'activation du frein de parking peut également être automatique. Par exemple et de manière non limitative, si l'ordinateur de bord détecte que le moteur est coupé et que le véhicule est stationné sur une pente.

Avantageusement pour interrompre le freinage de parking, les premier et deuxième pistons sont appliqués contre la plaquette de frein, et ensuite le motoréducteur est activé en sens inverse pour écarter le troisième piston de la plaque 30. Ce mode de fonctionnement facilite le retrait du troisième piston.

Le freinage de service est assuré par les premier et deuxième pistons.

Avantageusement le troisième piston peut assurer un freinage de secours en cas de défaillance du système hydraulique. Le troisième piston peut être capable d'appliquer seul un effort de l'ordre 28 kN. La valeur de cet effort dépend de l'actionneur mis en œuvre.

Dans un autre exemple de réalisation, le troisième piston est également un piston électrohydraulique, i.e. il est actionnable à la fois électriquement et hydrauliquement. Une alimentation en liquide de freinage est alors prévue pour exercer alimenter une chambre dans laquelle coulisse le troisième piston. Avantageusement la liaison vis-écrou baigne dans le liquide de frein assurant sa lubrification Le troisième piston est alors également déplacé lors de la première phase. Lors de la deuxième phase il exerce un effort supplémentaire sur la plaquette de frein intérieure sous l'action du motoréducteur et est bloqué en position. La pression hydraulique est ensuite relâchée pour les trois pistons.

Le freinage de service est assuré par les premier et deuxième pistons ou par les premier, deuxième et troisième pistons.

Avantageusement le troisième piston avec son mécanisme de frein de parking peut assurer un freinage de secours en cas de défaillance du système hydraulique.

A titre de comparaison uniquement, un frein à disque selon l'invention comportant un premier et un deuxième pistons de diamètre 36 mm et un troisième piston de diamètre 36 mm est équivalent à un frein bipiston comportant deux pistons de diamètre 44 mm chacun.

Un frein à disque selon l'invention comportant un premier et un deuxième pistons de diamètre 34 mm et un troisième piston de diamètre 48 mm est équivalent à un frein bipiston comportant deux pistons de diamètre 48 mm chacun.

Un frein à disque selon l'invention comportant un premier et un deuxième pistons de diamètre 36 mm et un troisième piston de diamètre 51 mm est équivalent à un frein bipiston comportant deux pistons de diamètre 51 mm chacun.

L'invention permet d'utiliser des pistons uniquement déplacés par la pression hydraulique de diamètre réduits par rapport à ceux des freins bipistons, ce qui permet de réduire la quantité de liquide de frein requis pour leur déplacement. Il sera compris que la présente invention s'applique également à un frein à disque à étrier fixe, i.e. comportant des jeux de pistons et deux éléments de poussée pour déplacer chaque plaquette séparément.

Le frein à disque selon l'invention est particulièrement adapté pour les véhicules lourds voitures dites sportives de grosse cylindrée, des véhicules utilitaires sports ou SUV (Sport Utility Vehicle en terminologie anglo-saxonne) et les véhicule utilitaires légers désignés « light trucks » en terminologie anglo-saxonne, notamment avec une masse totale avec charge supérieure ou égale à 3,5 T.

### REFERENCES

10 frein à disque
12 étrier
11 chape
14 boîtier
15 premier piston
15.1 nez du premier piston
16 deuxième piston
16.1 nez du deuxième piston
18 troisième piston
18.1 nez du deuxième piston
20 actionneur électromécanique
22 vis
24 nez d'étrier
26 voûte
30 plaque d'interface
30.1 face aval
30.2 face amont
32 première ouverture
34 deuxième ouverture
36 zone centrale
C1 première colonnette
C2 deuxième colonnette
P1 première plaquette de frein
P2 deuxième plaquette de frein
R1, R2 ressorts
X direction de coulissement de l'étrier

## Revendications

1. Frein à disque comportant :
au moins une première plaquette de frein (P1) montée coulissante relativement au disque , ladite première plaquette de frein (P1) comportant un support de plaquette et un matériau de friction,
un étrier (12) comportant :
des moyens de déplacement de ladite première plaquette comprenant au moins un premier piston (15) et un deuxième piston (16) montés coulissant dans l'étrier (12) et actionnables hydrauliquement, de sorte à déplacer la première plaquette de frein (P1) par rapport au disque,
comportant également au moins un élément de poussée (18) monté coulissant dans l'étrier (12) et actionnable au moins par un actionneur (20) configuré pour déplacer axialement l'élément de poussée (18), ledit élément de poussée (18) étant disposé entre le premier piston (15) et le deuxième piston (16) en considérant une direction transversale,
**caractérisé en ce qu'**il comporte également un dispositif d'interface disposé entre l'élément de poussée (18) et le support de plaquette, ledit dispositif d'interface comportant :
une plaque d'interface (30) comprenant une première ouverture traversante (32) alignée avec le premier piston (15) et traversé par le nez de piston (15.1) du premier piston (15) et une deuxième ouverture (34) traversante, alignée avec le deuxième piston (16) et traversée par le nez de piston (16.1) du deuxième piston (16), de sorte à venir en contact avec le support de plaquette,
et **en ce que** le nez (18.1) dudit élément de poussée (18) est agencé pour venir en contact avec une zone centrale pleine (36) de la plaque d'interface (30) entre les première (32) et deuxième (34) ouvertures.

2. Frein à disque selon la revendication 1, dans lequel la plaque d'interface (30) du dispositif d'interface est guidée axialement relativement au disque, notamment par rapport à une chape (11) de frein à disque à étrier flottant.

3. Frein à disque selon la revendication 1 ou 2, dans lequel les dimensions des première (32) et deuxième (34) ouvertures sont telles que les premier (15) et deuxième (16) pistons coulissent librement dans les première (32) et deuxième (34) ouvertures respectivement.

4. Frein à disque selon l'une des revendications précédentes, dans lequel la plaque (30) est en acier, notamment en acier dur, et/ou dans lequel la plaque (30) est dans le même matériau que le matériau du support de plaquette.

5. Frein à disque selon l'une des revendications précédentes, dans lequel l'élément de poussée (18) est actionnable hydrauliquement et/ou dans lequel l'élément de poussée (18) est actionnable par un actionneur électromécanique.

6. Frein à disque selon l'une quelconque des revendications précédentes, comportant une chape (11), et une deuxième plaquette de frein, et dans lequel l'étrier est monté coulissant par rapport à la chape.

7. Frein à disque selon l'une quelconque des revendications 1 à 5, comportant un boitier d'étrier et une deuxième plaquette de frein, le frein à disque étant un frein à disque à étrier fixe.

8. Frein à disque selon l'une quelconque des revendications précédentes, le frein à disque mettant en œuvre un procédé d'actionnement du frein, suite à une instruction d'activer le frein de parking, comportant :
a) Déplacement des premier et deuxième pistons par application d'une pression hydraulique de sorte à venir en contact direct avec le support de plaquette à travers la plaque d'interface et à appliquer le matériau de friction de la plaquette de frein contre le disque de frein,
b) Maintien de la pression hydraulique,
c) Déplacement de l'élément de poussée au moyen dudit actionneur de sorte à venir en appui contre la plaque d'interface et à appliquer davantage le matériau de friction de la plaquette de frein contre le disque de frein à travers la plaque d'interface,
d) Blocage de l'élément de poussée en position,
e) Relâchement de la pression hydraulique.

9. Frein à disque selon la revendication précédente en combinaison avec la revendication 5 dans lequel, lors de l'étape a) du procédé d'actionnement du frein, l'élément de poussée est déplacé par application d'une pression hydraulique.

10. Frein à disque selon la revendication 8 ou 9, dans lequel le procédé d'actionnement comporte, suite à une instruction de désactiver le frein de parking:
- Déplacement des premier et deuxième pistons par application d'une pression hydraulique de sorte à venir exercer un effort supplémentaire sur le matériau de friction de la plaquette de frein contre le disque de frein,
- Maintien de la pression hydraulique,
- Déplacement de l'élément de poussée au moyen dudit actionneur en éloignement de la plaque d'interface,
- Relâchement de la pression hydraulique.

11. Dispositif d'interface pour frein à disque, ledit frein à disque comportant au moins deux pistons actionnables hydrauliquement et un élément de poussée actionnable au moins électriquement,
**caractérisé en ce que** ledit dispositif comporte une plaque d'interface (30) configurée pour se loger entre le support de plaquette et des moyens de déplacement de ladite plaquette en direction du disque de frein,
ladite plaque d'interface (30) comportant deux ouvertures (32, 34) pour les passages desdits deux pistons actionnables hydrauliquement et une zone centrale pleine.

12. Dispositif d'interface pour frein à disque, selon la revendication précédente, configuré pour être guidé au moins axialement relativement au disque, notamment par une chape (11) lorsque le frein à disque est un frein à disque à étrier flottant.

13. Dispositif d'interface pour disque de frein selon la revendication 11 ou 12, dans lequel la plaque d'interface est en acier dur.

## Patentansprüche

1. Scheibenbremse, die Folgendes aufweist:
mindestens einen ersten Bremsbelag (P1), der relativ zu der Scheibe gleitend montiert ist, wobei der erste Bremsbelag (P1) einen Bremsbelagträger und ein Reibmaterial aufweist,
einen Bügel (12), der Folgendes aufweist:
Mittel zum Verschieben des ersten Bremsbelags, mindestens umfassend einen ersten Kolben (15) und einen zweiten Kolben (16), die in dem Bügel (12) gleitend montiert und hydraulisch betätigbar sind, so dass der erste Bremsbelag (P1) in Bezug auf die Scheibe verschoben wird,
ferner aufweisend mindestens ein Druckelement (18), das in dem Bügel (12) gleitend montiert und mindestens durch ein Stellglied (20) betätigbar ist, das so eingerichtet ist, dass es das Druckelement (18) axial verschiebt,
wobei das Druckelement (18) zwischen dem ersten Kolben (15) und dem zweiten Kolben (16) betrachtet in einer Querrichtung angeordnet ist,
**dadurch gekennzeichnet, dass** es auch eine Schnittstellenvorrichtung aufweist, die zwischen dem Druckelement (18) und dem Bremsbelagträger angeordnet ist, wobei die Schnittstellenvorrichtung Folgendes aufweist:
eine Schnittstellenplatte (30), umfassend eine erste durchgehende Öffnung (32), die mit dem ersten Kolben (15) ausgerichtet ist und durch die Kolbennase (15.1) des ersten Kolbens (15) hindurchgeführt wird, und eine zweite durchgehende Öffnung (34), die mit dem zweiten Kolben (16) ausgerichtet ist und durch die Kolbennase (16.1) des zweiten Kolbens (16) hindurchgeführt wird, so dass sie mit dem Bremsbelagträger in Kontakt kommt,
und dass die Nase (18.1) des Druckelements (18) so angeordnet ist, dass sie mit einem vollen zentralen Bereich (36) der Schnittstellenplatte (30) zwischen den ersten (32) und zweiten (34) Öffnungen in Kontakt kommt.

2. Scheibenbremse nach Anspruch 1, wobei die Schnittstellenplatte (30) der Schnittstellenvorrichtung axial relativ zu der Scheibe, insbesondere in Bezug auf einen Gabelkopf (11) einer Scheibenbremse mit schwimmendem Bremsbügel, geführt ist.

3. Scheibenbremse nach Anspruch 1 oder 2, wobei die Abmessungen der ersten (32) und zweiten (34) Öffnungen so sind, dass die ersten (15) und zweiten (16) Kolben frei in den ersten (32) und zweiten (34) Öffnungen gleiten.

4. Scheibenbremse nach einem der vorhergehenden Ansprüche, wobei die Platte (30) aus Stahl, insbesondere aus hartem Stahl, und/oder wobei die Platte (30) aus demselben Material besteht wie das Material des Bremsbelagträgers.

5. Scheibenbremse nach einem der vorhergehenden Ansprüche, wobei das Druckelement (18) hydraulisch betätigbar ist und/oder wobei das Druckelement (18) durch ein elektromechanisches Stellglied betätigbar ist.

6. Scheibenbremse nach einem der vorhergehenden Ansprüche, die einen Gabelkopf (11) und einen zweiten Bremsbelag aufweist, und wobei der Bremsbügel relativ zu dem Gabelkopf gleitend montiert ist.

7. Scheibenbremse nach einem der Ansprüche 1 bis 5, umfassend ein Bremsbügelgehäuse und einen zweiten Bremsbelag, wobei die Scheibenbremse eine Festbügelscheibenbremse ist.

8. Scheibenbremse nach einem der vorhergehenden Ansprüche, wobei die Scheibenbremse ein Verfahren zum Betätigen der Bremse infolge einer Anweisung zum Aktivieren der Feststellbremse umsetzt, das Folgendes aufweist:
a) Verschieben des ersten und zweiten Kolbens durch Anlegen eines hydraulischen Drucks, so dass er durch die Schnittstellenplatte in direkten Kontakt mit dem Bremsbelagträger kommt und das Reibmaterial des Bremsbelags an die Bremsscheibe anlegt,
b) Aufrechterhalten des Hydraulikdrucks,
c) Verschieben des Druckelements mithilfe des Stellglieds, so dass es an der Schnittstellenplatte anliegt und das Reibmaterial des Bremsbelags durch die Schnittstellenplatte stärker an die Bremsscheibe anliegt,
d) Arretieren des Druckelements in Position,
e) Ablassen des Hydraulikdrucks.

9. Scheibenbremse nach dem vorhergehenden Anspruch in Kombination mit Anspruch 5, wobei bei dem Schritt a) des Bremsbetätigungsverfahrens das Druckelement durch Anlegen eines hydraulischen Drucks verschoben wird.

10. Scheibenbremse nach Anspruch 8 oder 9, wobei das Betätigungsverfahren infolge einer Anweisung zum Deaktivieren der Feststellbremse aufweist:
- Verschieben des ersten und zweiten Kolbens durch Anlegen eines hydraulischen Drucks, so dass eine zusätzliche Kraft auf das Reibmaterial des Bremsbelags gegen die Bremsscheibe ausgeübt wird,
- Aufrechterhalten des Hydraulikdrucks,
- Verschieben des Druckelements mittels des Stellglieds weg von der Schnittstellenplatte,
- Ablassen des Hydraulikdrucks.

11. Schnittstellenvorrichtung für eine Scheibenbremse, wobei die Scheibenbremse mindestens zwei hydraulisch betätigte Kolben und ein mindestens elektrisch betätigtes Druckelement aufweist,
**dadurch gekennzeichnet, dass** die Vorrichtung eine Schnittstellenplatte (30) aufweist, die so eingerichtet ist, dass sie zwischen dem Bremsbelagträger und den Mitteln zum Verschieben des Bremsbelags in Richtung der Bremsscheibe sitzt,
wobei die Schnittstellenplatte (30) zwei Öffnungen (32, 34) für die Durchgänge der beiden hydraulisch betätigbaren Kolben und einen vollen Mittelbereich aufweist.

12. Schnittstellenvorrichtung für eine Scheibenbremse nach dem vorhergehenden Anspruch, die so eingerichtet ist, dass sie mindestens axial zu der Scheibe geführt wird, insbesondere durch einen Gabelkopf (11), wenn die Scheibenbremse eine Scheibenbremse mit schwimmendem Bremsbügel ist.

13. Schnittstellenvorrichtung für eine Bremsscheibe nach Anspruch 11 oder 12, wobei die Schnittstellenplatte aus hartem Stahl ist.

## Claims

1. A disc brake including:
at least one first brake pad (P1) mounted in a sliding manner relative to the disc, said first brake pad (P1) comprising a pad support and a friction material,
a calliper (12) including:
means for moving said first pad comprising at least a first piston (15) and a second piston (16) mounted in a sliding manner in the calliper (12) and hydraulically actuatable, so as to move the first brake pad (P1) relative to the disc,
further including at least one push member (18) mounted in a sliding manner in the calliper (12) and which can be actuated at least by an actuator (20) configured to move the push member (18) axially, said push member (18) being arranged between the first piston (15) and the second piston (16) considering a transverse direction,
**characterised in that** it also includes an interface device arranged between the push member (18) and the pad support, said interface device including:
an interface plate (30) comprising a first through-opening (32) aligned with the first piston (15) and traversed by the piston head (15.1) of the first piston (15) and a second through-opening (34) aligned with the second piston (16) and traversed by the piston head (16.1) of the second piston (16), so as to come into contact with the pad support,
and **in that** the head (18.1) of said push member (18) is arranged to come into contact with a solid central area (36) of the interface plate (30) between the first (32) and second (34) openings.

2. The disc brake according to claim 1, wherein the interface plate (30) of the interface device is guided axially relative to the disc, in particular relative to a carrier (11) of a disc brake with a floating calliper.

3. The disc brake according to claim 1 or 2, wherein the dimensions of the first (32) and second (34) openings are such that the first (15) and second (16) pistons slide freely in the first (32) and second (34) openings respectively.

4. The disc brake according to one of the preceding claims, wherein the plate (30) is made of steel, in particular made of hard steel, and/or wherein the plate (30) is made of the same material as the material of the pad support.

5. The disc brake according to one of the preceding claims, wherein the push member (18) is hydraulically actuatable and/or wherein the push member (18) is actuatable by an electromechanical actuator.

6. The disc brake according to any one of the preceding claims, including a carrier (11), and a second brake pad, and wherein the calliper is mounted in a sliding manner relative to the carrier.

7. The disc brake according to any one of claims 1 to 5, including a calliper case and a second brake pad, the disc brake being a fixed calliper disc brake.

8. The disc brake according to any one of the preceding claims, the disc brake implementing a method for actuating the brake, following an instruction to activate the parking brake, including:
a) Moving the first and second pistons by applying hydraulic pressure so as to come into direct contact with the pad support through the interface plate and to apply the friction material of the brake pad against the brake disc,
b) Maintaining hydraulic pressure,
c) Moving the push member by means of said actuator so as to bear against the interface plate and to further apply the friction material of the brake pad against the brake disc through the interface plate,
d) Blocking the push member in position,
e) Releasing hydraulic pressure.

9. The disc brake according to the preceding claim as combined with claim 5 wherein, during step a) of the brake actuation method, the push member is moved by application of hydraulic pressure.

10. The disc brake according to claim 8 or 9, wherein the actuation method includes, following an instruction to deactivate the parking brake:
- Moving the first and second pistons by application of hydraulic pressure so as to exert additional force on the friction material of the brake pad against the brake disc,
- Maintaining hydraulic pressure,
- Moving the push member, by means of said actuator, away from the interface plate,
- Releasing hydraulic pressure.

11. An interface device for a disc brake, said disc brake including at least two hydraulically actuatable pistons and a push member which can be actuated at least electrically,
**characterised in that** said device comprises an interface plate (30) configured to be housed between the pad support and means for moving said pad towards the brake disc,
said interface plate (30) including two openings (32, 34) for the passages of said two hydraulically actuatable pistons and a solid central area.

12. The interface device for a disc brake, according to the preceding claim, configured to be guided at least axially relative to the disc, in particular by a carrier (11) when the disc brake is a disc brake with a floating calliper.

13. The interface device for a disc brake according to claim 11 or 12, wherein the interface plate is made of hard steel.
